# EUROPÄISCHE PATENTSCHRIFT

(11) **EP 3 880 041 B1**
(45) Veröffentlichungstag und Bekanntmachung des Hinweises auf die Patenterteilung: **18.10.2023**
(21) Anmeldenummer: 19805633.5
(22) Anmeldetag: 15.11.2019
(51) Int. Cl.: A47J 36/06, A47J 36/38

(54) **TOPFDECKEL**
POT LID
COUVERCLE

(30) Priorität: 13.02.2019 DE 202019100807 U
(43) Veröffentlichungstag der Anmeldung: 22.09.2021
(73) Patentinhaber: Maul, Helmut, 91249 Weigendorf (DE)
(72) Erfinder: Maul, Helmut, 91249 Weigendorf (DE)
(74) Vertreter: Glück Kritzenberger Patentanwälte PartGmbB
(86) Internationale Anmeldenummer: PCT/EP2019/081463
(87) Internationale Veröffentlichungsnummer: WO 2020/164766

(56) Entgegenhaltungen:
- CN-U- 208 319 072
- DE-C- 406 317
- DE-U1-202008 012 826
- GB-A- 628 068
- GB-A- 941 191

## Beschreibung

Die vorliegende Erfindung betrifft einen Topfdeckel für einen Haushaltskochtopf oder eine Pfanne sowie einen Kochtopf oder eine Pfanne mit einem erfindungsgemäßen Topfdeckel.

Der Topfdeckel umfasst einen kegelförmigen oder kreisscheibenförmigen Basiskörper mit einem Deckelrand, der zum Zusammenwirken mit der Oberkante eines Kochtopfs oder einer Pfanne konzipiert ist. Der Basiskörper hat eine Deckeloberseite und eine Deckelunterseite und eine diese verbindende zentrale Durchtrittsöffnung. Der Topfdeckel kann konusförmig oder plan sein, je nach Verwendungszweck. An seiner Deckeloberseite ist ein mit der Durchtrittsöffnung verbundener Kanal angeordnet, der zum Deckelrand hin geöffnet ist.

Aus der GB 628 068 A ist ein Deckel für einen Wasserkochtopf bekannt. Der Deckel umfasst einen kegelförmigen Basiskörper mit einem Deckelrand ist zum Zusammenwirken mit der Oberkante des Wasserkochtopfes ausgebildet. Der Basiskörper weist eine zentrale Durchtrittsöffnung auf und an der Deckeloberseite ist ein mit der Durchtrittsöffnung verbundener Kanal vorgesehen.

Derartige das Basiskonzept der Erfindung darstellende Topfdeckel sind konzipiert zur Verwendung in einem Bora-System, bei dem der Dunstabzug nicht über den Kochplatten angeordnet ist, sondern zwischen diesen, so dass die Abluft nach unten abgesogen wird. Durch den Kanal, der sich vorzugsweise an der Deckeloberseite geschlossen von der Durchtrittsöffnung bis zum Deckelrand hin erstreckt, wird der austretende Dampf in Richtung auf diejenige Seite des Topfes oder der Pfanne geleitet, an welcher die auf der Plattenebene angeordnete Bora-Abluftöffnung angeordnet ist. Auf diese Weise wird der Dampf möglichst nah an die Abluftöffnung des Bora-Systems geführt.

Es ist Aufgabe der Erfindung, einen Topfdeckel zu schaffen, der die Dampfabfuhr aus dem Topf oder der Pfanne für die Anwendung in einem Bora-System optimiert. Diese Aufgabe wird gelöst durch einen Topfdeckel mit den Merkmalen des Anspruchs 1. Vorteilhafte Weiterbildungen der Erfindung sind Gegenstand der Unteransprüche.

Erfindungsgemäß hat der Topfdeckel eine von der Deckelunterseite nach unten abstehende spiralförmige Führungswand, die sich von dem Deckelrand spiralförmig zur zentralen Durchtrittsöffnung hin erstreckt. An der Deckeloberseite ist die Durchtrittsöffnung mit dem Kanal verbunden, der konzipiert ist, den durch die Durchtrittsöffnung austretenden Abdampf zur Deckelwand hin zu führen. Zu diesem Zweck erstreckt sich der Kanal zumindest über einen Teil des Deckelradius, vorzugsweise über den gesamten Deckelradius, so dass dessen Austrittsöffnung exakt am Deckelrand angeordnet ist, so dass der am Deckelrand austretende Dampf leicht von einem Bora-Abluftsystem eingesogen werden kann. Durch die spiralförmige Führungswand an der Deckelunterseite wird der Abdampf harmonisch und kontinuierlich zur Durchtrittsöffnung hingeführt, wo er gesammelt wird und sich dann in dem Kanal zum Deckelrand hin weiterbewegt. Ein derartiger Topfdeckel ist für die Anwendung in einem Bora-Abluftsystem optimiert, da der Abdampf im Innenraum des Topfes oder der Pfanne effektiv aufgenommen und zur Durchtrittsöffnung geführt wird und andererseits von der Durchtrittsöffnung über den insbesondere geschlossenen Kanal zum Deckelrand hin gefördert wird.

In einer vorteilhaften Weiterbildung der Erfindung kann die Unterseite des Kanals durch die Deckeloberseite gebildet sein, so dass der Kanal entweder durch ein Teilkreisprofil gebildet ist, welches die Oberseite und die Seitenwände bildet, oder durch ein U-Profil, das auf die Oberseite des Topfdeckels aufgesetzt, zum Beispiel geschweißt, gelötet oder mit einer Rastverbindung festgelegt ist.

Vorzugsweise erstreckt sich der Kanal über einen Sektor des Topfdeckels, insbesondere von 5 bis 30°. Auf diese Weise ist der Querschnitt des Kanals von der Durchtrittsöffnung zum Deckelrand hin erweitert, so dass sich ein besserer Zug in dem Kanal ergibt, der zu einem besseren Austrittsverhalten des Abdampfs führt.

Vorzugsweise erstrecken sich die Seitenwände des Kanals in etwa radial zum Deckel und zumindest in etwa vertikal. Eine derartige Geometrie des Kanals an der Deckeloberseite ist herstellungstechnisch leicht zu realisieren.

In einer vorteilhaften Weiterbildung der Erfindung erstreckt sich die Oberseite des Kanals zumindest in etwa parallel zur Deckeloberseite. Auf diese Weise wird der Topfdeckel leichter handhabbar und weniger sperrig, so dass er zum Beispiel in einem Geschirrspüler kaum mehr Platz einnimmt als eine normaler Topfdeckle ohne Führungssystem für den Abdampf.

In einer vorteilhaften Weiterbildung der Erfindung erstreckt sich die spiralförmige Wand an der Deckelunterseite von der Durchtrittsöffnung durchgehend bis zum Deckelrand. Auf diese Weise wird eine über die gesamte Deckelunterseite spiralförmige kontinuierliche, d.h. zusammenhängende Führung für den Abdampf gebildet, was eine effektive Abfuhr des Abdampfes zur Durchtrittsöffnung hin bewirkt.

Vorzugsweise ist ein Stellmechanismus im Bereich der Durchtrittsöffnung angeordnet, um den Querschnitt eines Durchtrittsbereichs der Durchtrittsöffnung einzustellen. Dieser Stellmechanismus erlaubt die Regulierung der Abdampfmenge entsprechend den Bedürfnissen im Hinblick auf das Garen oder Kochen des Gutes.

In diesem Fall umfasst der Stellmechanismus vorzugsweise einen Drehmechanismus mit wenigstens jeweils einer Sektorenöffnung im Drehmechanismus, die entsprechend der Drehstellung des Stellmechanismus mehr oder weniger von einer relativ zum Basiskörper fest angeordneten Schließabschnitt bringbar ist. Auf diese Weise kann die Größe der Durchtrittsbereichs der Durchtrittsöffnung auf einfache Weise durch Drehen des Stellmechanismus, der vorzugsweise mit einem zentralen Topfdeckelgriff verbunden ist, eingestellt werden.

In einer vorteilhaften Weiterbildung der Erfindung hat der Kanal zum Deckelrand hin eine nach unten gerichtete Austrittsöffnung, was dazu führt, dass der Abdampf direkt in Richtung auf die Abluftöffnungen eines Bora-Systems geführt werden.

Vorzugsweise ist der Querschnitt des Kanals zum Deckelrand hin erweitert, insbesondere kontinuierlich erweitert, was dazu führt, dass der Abdampf leichter durch den Kanal passieren kann, weil hier eine Art Sogeffekt auftritt.

In einer vorteilhaften ersten Ausführungsform der Erfindung ist die spiralförmige Wand und/oder der Kanal als mit dem Basiskörper verbindbares separates Teil ausgebildet. In diesem Fall können beispielsweise vor dem Säubern, zum Beispiel in einer Spülmaschine, der Kanal und/oder die spiralförmige Wand von dem Basiskörper abgenommen werden, wodurch die Einzelteile leichter zu reinigen oder eventuell sogar auszutauschen sind.

In einer dazu alternativen herstellungstechnisch günstigen Ausführungsform sind der Basiskörper und die spiralförmige Wand und/oder der Kanal einstückig, insbesondere aus Metall hergestellt. Die spiralförmige Wand kann zum Beispiel in die Unterseite des Basiskörpers eingeprägt sein, während der Kanal auf der Oberseite des Basiskörpers durch herkömmliche Verbindungstechniken aufgebracht sein kann. Es ist hier zum Beispiel eine lösbare Snap-Lock-Verbindung zur Befestigung des Kanals vorstellbar. Der Kanal kann hierbei vorzugsweise an zwei Punkten des Basiskörpers, nämlich vorzugsweise im Bereich der zentralen Durchtrittsöffnung als auch am Deckelrand festgelegt sein. Der Kanal kann zur Durchtrittsöffnung hin auch am Drehknopf festgelegt sein.

Die Erfindung betrifft selbstverständlich auch einen Kochtopf oder eine Pfanne umfassend einen Topfdeckel der oben beschriebenen Weise zum Aufsetzen auf den Topf- bzw. Pfannenrand.

Folgende Ausdrücke werden synonym verwendet: Deckeloberseite - Oberseite des Basiskörpers; Deckelunterseite - Unterseite des Basiskörpers;

Es ist für den Fachmann offensichtlich, dass die oben beschriebenen Ausführungsformen in beliebiger Weise miteinander kombinierbar sind.

Die Erfindung wird nachfolgend beispielsweise anhand der schematischen Zeichnung beschrieben. In dieser zeigen:
- Fig. 1: einen teilgeschnittenen senkrechten Querschnitt durch einen erfindungsgemäßen Topfdeckel,
- Fig. 2: eine Aufsicht von unten auf die Deckelunterseite, und
- Fig. 3: eine Aufsicht von oben auf die Deckeloberseite.

Der Topfdeckel wird nachfolgend mit Bezug auf alle drei Figuren beschrieben, die eine Ausführungsform des Topfdeckels 10 aus verschiedenen Perspektiven zeigt.

Der dargestellte Topfdeckel 10 hat einen kegelförmigen Basiskörper 12. Der Basiskörper 12 kann jedoch auch in Form einer ebenen Kreisplatte ausgebildet sein, in welchem Fall die Durchtrittsöffnung zumindest in etwa auf der gleichen Höhe liegt wie der Deckelrand. Der Topfdeckel 10 hat eine Deckeloberseite 13 und eine Deckelunterseite 15. In der Mitte des Basiskörpers 12 ist eine zentrale Durchtrittsöffnung 14 ausgebildet, in welcher ein Drehknopf 16 drehbar aufgenommen ist, der einen Griff 18 zum Handhaben des Topfdeckels 10 aufweist. Der Drehknopf 16 ist drehbar in der zentralen Durchtrittsöffnung 14 gehalten und hat einen Schaftteil 20, der einen offenen Durchtrittssektor 22 aufweist, der die Deckelunterseite 15 mit der Deckeloberseite 13 verbindet. Der Durchtrittssektor 22 kann durch Drehen des Drehknopfes 16 mehr oder weniger in Deckung mit einer Schließabschnitt 24 gebracht werden, die an der Deckelunterseite 15 angeordnet ist, z.B. nach unten absteht und sich in etwa über einen Sektor am Rand der Durchtrittsöffnung 14 erstreckt, welcher die gleiche Größe hat wie der Durchtrittssektor 22 im Schaftteil 20 des Drehknopfes 16. Die Größe des Durchtrittsquerschnitts für die Abfuhr des Abdampfes lässt sich somit dadurch einstellen, dass der Durchtrittssektor 24 im Schaftteil 20 des Drehknopfes 16 mehr oder weniger von der Schließabschnitt 24 abgedeckt wird.

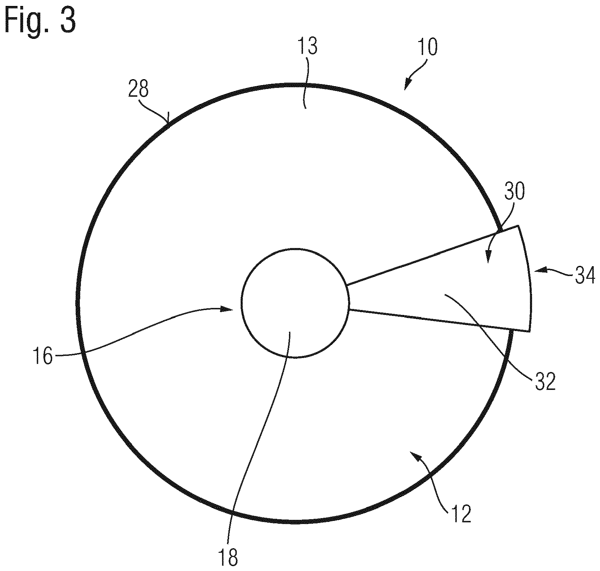

An seiner Unterseite hat der Basiskörper 12 eine spiralförmige Führungswand 26, die sich vom Deckelrand 28 bis zur zentralen Durchtrittsöffnung 14 erstreckt. An der Deckeloberseite ist ein Kanal 30 angeordnet, welcher sich vorzugsweise über einen Sektor α des Topfdeckels erstreckt und somit von der Mitte des Topfdeckels 10 nach außen hin erweitert ist (siehe Fig. 3). Der Kanal ist vorzugsweise - ausgenommen die Verbindung zum Durchtrittsquerschnitt 22 und zu einer an seinem äußeren Ende angeordneten Austrittsöffnung 34 - geschlossen, so dass der Dampf vollständig zu Austrittsöffnung 34 hin geleitet wird, wo er insbesondere von einem Bora-Abluftsystem eingesogen werden kann.

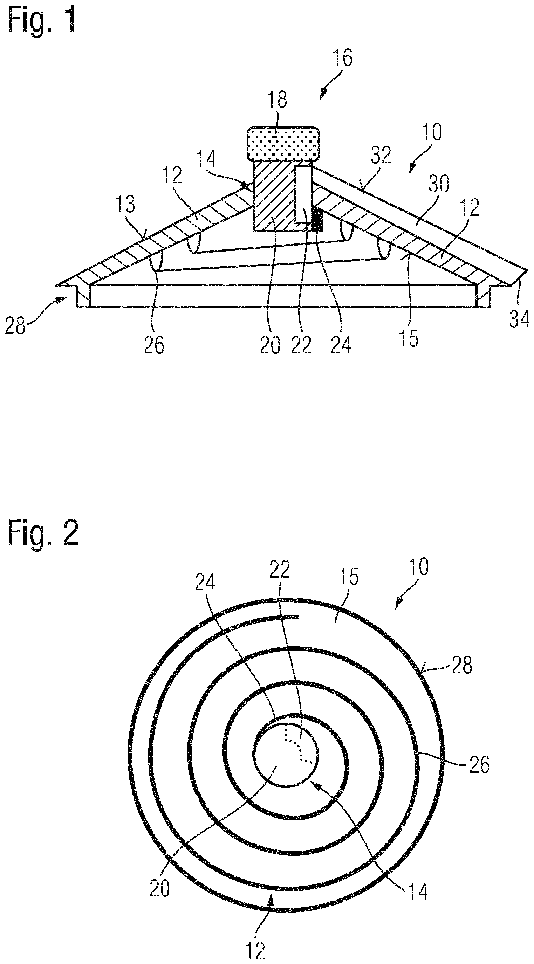

Wie aus Fig. 1 zu sehen ist, erstreckt sich die Oberseite 32 des Kanals 30 in etwa parallel zur Deckeloberseite 13. Etwas über den Deckelrand 28 hinausstehend begrenzt die nach unten weisende Austrittsöffnung 34 den Kanal 30 nach außen hin. Der Kanal 30 ist zu dem Durchtrittssektor 22 des Schaftteils 20 des Drehknopfes 16 hin geöffnet, wenn dieser nicht von der Schließabschnitt 24 abgedeckt ist. Auf diese Weise kann Abdampf effektiv von der Deckelunterseite 15 mittels der spiralförmigen Führungswand 26 zum Durchtrittssektor 22 geführt werden, dort durchtreten und über den Kanal 30 über die Austrittsöffnung 34 zum Deckelrand 28 geführt werden wo er nach unten hin durch eine Bora-Abluftanlage abgesaugt werden. Der dargestellte Topfdeckel ist somit sehr gut in der Lage, den bei einem Koch- oder Bratvorgang auftretenden Wasser- und Fettdampf für ein Bora-Abluftsystem abzuführen.

Es ist noch auszuführen, dass die spiralförmige Führungswand 26 und der Kanal 30 einstückig an dem Basiskörper ausgebildet sein können oder als separate Elemente. Der Kanal 30 kann zum Beispiel ein U-Profil sein, welches an der Deckeloberseite 13 durch herkömmliche Verbindungstechniken wie Schweißen oder Löten angebracht sein kann.

Falls der Kanal abnehmbar sein soll, kann dieser auch durch eine lösbare Rasttechnologie an der Oberseite festgelegt sein, zum Beispiel zwischen dem Drehknopf 16 und dem Deckelrand 28.

Auch die spiralförmige Führungswand 26 an der Unterseite des Basiskörpers 12 kann mit dem Basiskörper 12 einstückig hergestellt sein, zum Beispiel durch Prägen oder Anschweißen, oder aber als separates Teil in Form eines spiralförmigen Wandeinsatzes, der abnehmbar an der Deckelunterseite 15 gehalten ist. Auf diese Weise ist zum Beispiel eine einfache Reinigung der einzelnen Komponenten möglich.

Der Stellmechanismus im Bereich der Durchtrittsöffnung 14 kann natürlich anders als in dem dargestellten Ausführungsbeispiel ausgeführt sein. Ebenso muss sich der Kanal 30 nicht über einen Sektor des Topfdeckels erstrecken, sondern kann zueinander parallele Seitenwände aufweisen. Der Kanal kann durch ein U-Profil gebildet sein, welches umgekehrt herum auf der Deckeloberseite 13 festgelegt ist oder er kann als ein rundum geschlossener Kanal 30 ausgebildet sein, welcher an der Deckeloberseite 13 entweder fest verbunden oder lösbar angeordnet ist.

Die Erfindung ist nicht auf das dargelegte Ausführungsbeispiel beschränkt, sondern kann interhalb des Schutzbereichs der beiliegenden Ansprüche variiert werden.

### Bezugszeichenliste:

- 10: Topfdeckel
- 12: Basiskörper
- 13: Deckeloberseite
- 14: Durchtrittsöffnung
- 15: Deckelunterseite
- 16: Drehknopf
- 18: Griff
- 20: Schaftteil des Drehknopfes
- 22: Öffnungssektor
- 24: Schließabschnitt
- 26: spiralförmige Führungswand
- 28: Deckelrand
- 30: Kanal
- 32: Kanaloberseite
- 34: Austrittsöffnung des Kanals
- α: Sektor über den sich der Kanal erstreckt

## Patentansprüche

1. Topfdeckel (10) für einen Haushaltskochtopf, umfassend einen kegelförmigen Basiskörper (12) mit einem Deckelrand (28) konzipiert zum Zusammenwirken mit der Oberkante eines Kochtopfs oder einer Pfanne, welcher Basiskörper (12) eine zentrale Durchtrittsöffnung (14) aufweist, welcher Topfdeckel (10) an seiner Deckeloberseite (13) einen mit der Durchtrittsöffnung (14) verbundenen Kanal (30) aufweist, der sich zumindest über einen Teil des Deckelradius zum Deckelrand (28) hin erstreckt und zu diesem hin offen ist, **dadurch gekennzeichnet, dass** die Deckelunterseite (15) des Topfdeckels (10) eine nach unten stehende spiralförmige Führungswand (26) aufweist, die sich vom Deckelrand zur Durchtrittsöffnung (14) hin erstreckt.

2. Topfdeckel (10) nach Anspruch 1, **dadurch gekennzeichnet, dass** die Unterseite des Kanals (30) durch die Deckeloberseite (13) gebildet ist.

3. Topfdeckel (10) nach Anspruch 1 oder 2, **dadurch gekennzeichnet, dass** der Kanal (30) sich über einen Sektor des Topfdeckels von 5 bis 30 Grad erstreckt.

4. Topfdeckel (10) nach einem der vorhergehenden Ansprüche, **dadurch gekennzeichnet, dass** die Seitenwände des Kanals (30) sich radial und zumindest in etwa vertikal erstrecken.

5. Topfdeckel (10) nach einem der vorhergehenden Ansprüche, **dadurch gekennzeichnet, dass** die Oberseite (32) des Kanals (30) sich zumindest in etwa parallel zur Deckeloberseite (13) erstreckt.

6. Topfdeckel (10) nach einem der vorhergehenden Ansprüche, **dadurch gekennzeichnet, dass** sich die spiralförmige Führungswand (26) durchgehend zwischen Durchtrittsöffnung (14) und Deckelrand (28) erstreckt.

7. Topfdeckel (10) nach einem der vorhergehenden Ansprüche, **dadurch gekennzeichnet, dass** ein Stellmechanismus (16, 22) zur Veränderung der Größe der Durchtrittsquerschnitts in der Durchtrittsöffnung (14) angeordnet ist.

8. Topfdeckel (10) nach Anspruch 7, **dadurch gekennzeichnet, dass** der Stellmechanismus (16, 22) einen Drehmechanismus (16) umfasst mit einem Durchtrittssektor (22), der entsprechend der Drehstellung des Drehmechanismus (16) mehr oder weniger in Übereinstimmung mit einer Schließabschnitt (24) bringbar ist, der fest am Basiskörper (12) angeordnet ist.

9. Topfdeckel (10) nach einem der vorhergehenden Ansprüche, **dadurch gekennzeichnet, dass** der Kanal (30) zum Deckelrand (28) hin eine nach unten gerichtete Austrittsöffnung (34) aufweist.

10. Topfdeckel (10) nach einem der vorhergehenden Ansprüche, **dadurch gekennzeichnet, dass** der Querschnitt des Kanals (30) zum Deckelrand (28) hin erweitert ist, insbesondere kontinuierlich erweitert ist.

11. Topfdeckel (10) nach einem der vorhergehenden Ansprüche, **dadurch gekennzeichnet, dass** die spiralförmige Wand (26) und/oder der Kanal (30) von dem Basiskörper (12) abnehmbares separates Teil ausgebildet ist/sind.

12. Topfdeckel (10) nach einem Ansprüche 1 bis 10, **dadurch gekennzeichnet, dass** der Basiskörper (12) mit der spiralförmigen Führungswand (26) einstückig ausgebildet sind, und insbesondere aus Metall bestehen.

13. Topfdeckel (10) nach einem Ansprüche 1 bis 10, **dadurch gekennzeichnet, dass** der Basiskörper (12) mit dem Kanal (30) einstückig ausgebildet sind, und insbesondere aus Metall bestehen.

14. Kochtopf umfassend einen Topfkörper und einen Topfdeckel (10) nach einem der vorhergehenden Ansprüche zum Aufsetzen auf den Topfkörper.

15. Pfanne umfassend einen Pfannenkörper und einen Topfdeckel (10) nach einem der vorhergehenden Ansprüche 1 bis 13 zum Aufsetzen auf den Pfannenkörper.

## Claims

1. Pot lid (10) for a household cooking pot, comprising a conical main body (12) having a lid edge (28) designed to interact with the upper edge of a cooking pot or pan, which main body (12) comprises a central through-opening (14), which pot lid (10), on its lid top side (13), comprises a channel (30) which is connected to the through-opening (14) and extends at least over part of the lid radius towards the lid edge (28) and is open towards the lid edge, **characterized in that** the lid bottom side (15) of the pot lid (10) comprises a downwardly projecting spiral guide wall (26) extending from the lid edge towards the through-opening (14).

2. Pot lid (10) according to claim 1, **characterized in that** the bottom side of the channel (30) is formed by the lid top side (13).

3. Pot lid (10) according to claim 1 or 2, **characterized in that** the channel (30) extends over a sector of the pot lid of 5 to 30 degrees.

4. Pot lid (10) according to any one of the preceding claims, **characterized in that** the side walls of the channel (30) extend radially and at least approximately vertically.

5. Pot lid (10) according to any one of the preceding claims, **characterized in that** the top side (32) of the channel (30) extends at least approximately parallel to the lid top side (13).

6. Pot lid (10) according to any one of the preceding claims, **characterized in that** the spiral guide wall (26) extends continuously between the through-opening (14) and the lid edge (28).

7. Pot lid (10) according to any one of the preceding claims, **characterized in that** an adjusting mechanism (16, 22) for changing the size of the passage cross-section is arranged in the through-opening (14).

8. Pot lid (10) according to claim 7, **characterized in that** the adjusting mechanism (16, 22) comprises a rotary mechanism (16) with a passage sector (22) which, according to the rotational position of the rotary mechanism (16), can be brought more or less in congruence with a closing portion (24) fixedly arranged on the main body (12).

9. Pot lid (10) according to any one of the preceding claims, **characterized in that** the channel (30) comprises a downwardly directed outlet opening (34) towards the lid edge (28).

10. Pot lid (10) according to any one of the preceding claims, **characterized in that** the cross-section of the channel (30) is widened, in particular continuously widened, towards the lid edge (28).

11. Pot lid (10) according to any one of the preceding claims, **characterized in that** the spiral wall (26) and/or the channel (30) are/is formed as a separate part that can be removed from the main body (12).

12. Pot lid (10) according to any one of claims 1 to 10, **characterized in that** the main body (12) is formed integrally with the spiral guide wall (26), and in particular is made of metal.

13. Pot lid (10) according to any one of claims 1 to 10, **characterized in that** the main body (12) is formed integrally with the channel (30), and in particular is made of metal.

14. Cooking pot comprising a pot body and a pot lid (10) according to any one of the preceding claims for putting onto the pot body.

15. Pan comprising a pan body and a pot lid (10) according to any one of the preceding claims 1 to 13 for putting onto the pan body.

## Revendications

1. Couvercle (10) de marmite pour une marmite domestique, comprenant un corps de base (12) de forme conique, pourvu d'un bord (28) de couvercle conçu pour coopérer avec l'arête supérieure d'une marmite ou d'une poêle, lequel corps de base (12) comporte un orifice de passage (14) central, lequel couvercle (10) de marmite comporte sur sa face supérieure (13) de couvercle un canal (30) relié avec l'orifice de passage (14), qui s'étend au moins sur une partie du rayon du couvercle vers le bord (28) de couvercle et qui est ouvert en direction de celui-ci, **caractérisé en ce que** la face inférieure (15) de couvercle du couvercle (10) comporte une paroi de guidage (26) de forme hélicoïdale positionnée vers le bas, qui s'étend du bord de couvercle vers l'orifice de passage (14).

2. Couvercle (10) de marmite selon la revendication 1, **caractérisé en ce que** la face inférieure du canal (30) est constituée par la face supérieure (13) de couvercle.

3. Couvercle (10) de marmite selon la revendication 1 ou 2, **caractérisé en ce que** le canal (30) s'étend sur un secteur du couvercle de 5 à 30 degrés.

4. Couvercle (10) de marmite selon l'une quelconque des revendications précédentes, **caractérisé en ce que** les parois latérales du canal (30) s'étendent en direction radiale et au moins approximativement à la verticale.

5. Couvercle (10) de marmite selon l'une quelconque des revendications précédentes, **caractérisé en ce que** la face supérieure (32) du canal (30) s'étend au moins approximativement à la parallèle de la face supérieure (13) de couvercle.

6. Couvercle (10) de marmite selon l'une quelconque des revendications précédentes, **caractérisé en ce que** la paroi de guidage (26) de forme hélicoïdale s'étend en continu entre l'orifice de passage (14) et le bord (28) de couvercle.

7. Couvercle (10) de marmite selon l'une quelconque des revendications précédentes, **caractérisé en ce qu'**un mécanisme d'ajustement (16, 22) destiné à faire varier la taille de la section transversale de passage est placé dans l'orifice de passage (14).

8. Couvercle (10) de marmite selon la revendication 7, **caractérisé en ce que** le mécanisme d'ajustement (16, 22) comprend un mécanisme de rotation (16) pourvu d'un secteur de passage (22), qui en fonction de la position en rotation du mécanisme de rotation (16), est susceptible d'être amené plus ou moins en concordance avec un segment de fermeture (24) qui est fixement placé sur le corps de base (12).

9. Couvercle (10) de marmite selon l'une quelconque des revendications précédentes, **caractérisé en ce que** le canal (30) comporte en direction du bord (28) de couvercle un orifice de sortie (34) montrant vers le bas.

10. Couvercle (10) de marmite selon l'une quelconque des revendications précédentes, **caractérisé en ce que** la section transversale du canal (30) est élargie en direction du bord (28) de couvercle, est notamment élargie en continu.

11. Couvercle (10) de marmite selon l'une quelconque des revendications précédentes, **caractérisé en ce que** la paroi (26) de forme hélicoïdale et / ou le canal (30) est / sont conçu(s) sous la forme de partie séparée, amovible du corps de base (12).

12. Couvercle (10) de marmite selon l'une quelconque des revendications 1 à 10, **caractérisé en ce que** le corps de base (12) avec la paroi de guidage (26) de forme hélicoïdale sont conçus en monobloc et sont notamment constitués en métal.

13. Couvercle (10) de marmite selon l'une quelconque des revendications 1 à 10, **caractérisé en ce que** le corps de base (12) avec le canal (30) sont conçus en monobloc et sont notamment constitués en métal.

14. Marmite, comportant un corps de marmite et un couvercle (10) de marmite selon l'une quelconque des revendications précédentes, destiné à être posé sur le corps de marmite.

15. Poêle, comprenant un corps de poêle et un couvercle (10) de marmite selon l'une quelconque des revendications précédentes 1 à 13, destiné à être posé sur le corps de poêle.
